# EUROPÄISCHE PATENTSCHRIFT

(11) **EP 1 320 733 B1**
(45) Veröffentlichungstag und Bekanntmachung des Hinweises auf die Patenterteilung: **02.04.2008**
(21) Anmeldenummer: 01967052.0
(22) Anmeldetag: 30.08.2001
(51) Int. Cl.: G01J 5/00, B07C 5/342, G01N 21/85

(54) **VERFAHREN UND VORRICHTUNG ZUR ERMITTLUNG EINER TEMPERATURVERTEILUNG VON SCHÜTTGUT**
METHOD AND DEVICE FOR DETERMINING A TEMPERATURE DISTRIBUTION OF BULK MATERIAL
PROCEDE ET DISPOSITIF PERMETTANT DE DETERMINER LA DISTRIBUTION DE TEMPERATURES D'UN PRODUIT EN VRAC

(30) Priorität: 23.09.2000 DE 10047269
(43) Veröffentlichungstag der Anmeldung: 25.06.2003
(73) Patentinhaber: Fraunhofer-Gesellschaft zur Förderung der angewandten Forschung e.V., 80686 München (DE)
(72) Erfinder: MEINLSCHMIDT, Peter, 38112 Braunschweig (DE); PLINKE, Burkhard, 38102 Braunschweig (DE)
(74) Vertreter: Gerstein, Hans Joachim
(86) Internationale Anmeldenummer: PCT/DE2001/003336
(87) Internationale Veröffentlichungsnummer: WO 2002/025236

(56) Entgegenhaltungen:
- EP-A- 0 983 804
- DE-A- 2 230 724
- DE-A- 19 846 995
- GB-A- 2 057 123
- GB-A- 2 076 146
- US-A- 4 812 644
- US-A- 6 112 903

## Beschreibung

Die Erfindung bezieht sich auf ein Verfahren zur Erkennung von Brandgefährdungen lokal überhitzter Agglomerationen von Schüttgut.

Bei der Be- und Verarbeitung von Schüttgütern, insbesondere bei der Trocknung von Schüttgütern, kommt es oft zu Agglomerationen von Partikeln, die in ihrem Inneren zum Teil für lange Zeit sehr hohe Temperaturen beibehalten. Kommen diese Agglomerationen in eine sauerstoffreiche Umgebung, kann es zu Bränden mit zum Teil erheblichen Folgekosten kommen. Daher wird angestrebt, frühzeitig und möglichst im Laufe des Bearbeitungsprozesses diese heißen Agglomerationen bzw. heißen Partikel zu erkennen, um korrigierend in den Herstellungsprozess einzugreifen und sie zu entfernen oder zu löschen.

Je nach Art und Umfang des zu untersuchenden Materials werden zur Zeit verschiedene Verfahren zur Erkennung von Brandgefährdungen durch lokale Überhitzungen verwendet:

Punktuell messende Systeme, wie z. B. Thermopilesensoren, zeigen an, wenn ein offener Funke erkannt wird. Hierbei können aus Sicherheitsgründen mehrere dieser Sensoren hintereinander installiert werden, um möglichst viele Funken zu erkennen bzw. mögliche Löschaktionen auf ihre Wirksamkeit hin zu überprüfen.

Weiterhin werden zum Teil schnelle, flächenhaft messende Systeme, wie z. B. CCD-Kameras, verwendet, die eine optische Messung des Schüttgutes im Bereich des sichtbaren Lichtes durchführen, aber die hellen Funken nur in einem abgedunkelten Messvolumen erkennen können.

Weiterhin können mit Hilfe von Rauch- oder Gasdetektoren brandgefährdende Partikel ermittelt werden, wobei hierdurch eine gezielte Lokalisierung und Entfernung dieser Partikel nicht möglich ist.

Nachteilig an derartigen Verfahren und Vorrichtungen ist insbesondere, dass eine gezielte Erkennung brandgefährdeter Partikel oder Agglomerationen von Partikeln nicht möglich ist. Weiterhin werden die bekannten Messverfahren durch störende Einflüsse der Umgebung, z. B. Fremdlicht bei der Verwendung von CCD-Kameras, gestört. Problematisch ist insbesondere auch die Erkennung von Partikeln bzw. Agglomerationen von Partikeln, die auf dem Förderband durch andere Partikel verdeckt werden und somit von außen nur schwer oder gar nicht erkannt werden können.

Die GB 2076146 A1 beschreibt ein Verfahren und eine Vorrichtung zum Sortieren von Gegenständen, die mit Mikrowellen bestrahlt werden, um einen Temperaturgradienten zwischen dem zu sortierenden Gut mit unterschiedlichen Eigenschaften zu erreichen. Nach dem Bestrahlen mit Mikrowellen werden die zu sortierenden Teile über einen Infrarotsensor untersucht und über eine Sortiereinrichtung voneinander getrennt. Eine Erwärmung des zu sortierenden Gutes findet nur soweit statt, dass der Infrarotsensor einen Temperaturunterschied wahrnehmen kann. Weitere Vorrichtungen sind in der Dokumenten EP 983804 A1, DE 198 46 995 C2 and US-A-6,112,903 beschrieben.

Der Erfindung liegt die Aufgabe zugrunde, gegenüber dem Stand der Technik Verbesserungen zu schaffen und ein Verfahren zur Ermittlung einer Temperaturverteilung brennbarer Schüttgüter bereitzustellen, die eine vollständige Erfassung des gesamten Schüttgutes gewährleistet und eine Brandgefahr bei Agglomerationen verhindert.. Dies soll vorteilhafterweise mit geringem Aufwand und ohne eine Unterbrechung der laufenden Prozesse gewährleistet werden.

Diese Aufgabe wird durch ein Verfahren gemäß Anspruch 1 gelöst.

Der Erfindung liegt der Gedanke zugrunde, das Schüttgut zu vereinzeln und das vereinzelte Schüttgut thermographisch zu untersuchen. Die Vereinzelung erfolgt erfindungsgemäß über eine Fallstrecke. Hierzu kann das Schüttgut z.B. auf einem Förderband transportiert und von einem Ende eines Förderbandes fallengelassen werden. Weiterhin kann das Schüttgut auch z.B. eine schräge Ebene herabgleiten und anschließend herabfallen oder aus einem Behälter ausgeschüttet werden, sodass die Fallstrecke am Ende der Gleitebene, am Ende des Behälters oder an einer anderen geeigneten Stelle angeordnet sein kann.

Die Vermessung des Schüttgutes erfolgt durch Kameras, die auf einen Messbereich der Fallstrecke gerichtet sind. Wenn das Schüttgut über die Breite des Förderbandes oder die Breite einer Gleitebene verteilt zugeführt wird und eine weitere Vereinzelung durch die Beschleunigung des Schüttgutes aufgrund der Gravitation in der Fallstrecke eintritt, kann eine hinreichend gute Erfassung der einzelnen Partikel bzw. Agglomerationen von Partikeln mit den Kameras erreicht werden. Je nach Fördermenge kann zum einen ein hinreichend breiter Schüttgutstrom und zum anderen eine hinreichend große Fallstrecke verwendet werden.

Indem mindestens zwei Kameras verwendet werden, die an entgegengesetzten Seiten der Fallstrecke angeordnet sind, wird die Genauigkeit und Sicherheit des Messverfahrens erhöht. Hierdurch kann wiederum auch die Fördermenge des Schüttgutes erhöht werden.

Erfindungsgemäß können sowohl Flächenkameras verwendet werden, die jeweils einen Flächenbereich der Messstrecke erfassen und örtlich auflösen. Je nach der örtlichen Auflösung können Temperaturerhöhungen der einzelnen Messpunkte erfasst werden. Bei Verwendung einer Flächenkamera kann der ganze Schüttgutstrom mittels eines getakteten Aufnahmeverfahrens erfasst werden, wobei die Bildaufnahmefrequenz von der Höhe des Messbereiches und der Fallgeschwindigkeit des Schüttgutes abhängt.

Weiterhin können auch Zeilenkameras verwendet werden, die jeweils Zeilenbereiche der Fallstrecke erfassen. Bei der Verwendung einer Zeilenkamera erfolgt eine kontinuierliche Bilderfassung bzw. Bilderfassung mit hinreichend hoher Frequenz, so dass der gesamte Schüttgutstrom, der die Fallstrecke herabfällt, durch die einzelnen Messungen der Zeilenmessbereiche erfasst werden kann.

Erfindungsgemäß wird die Vereinzelung des Schüttgutes in dem jeweiligen Messbereich durch die mit Schüttgut beaufschlagte Breite des Förderbandes oder Breite der Gleitebene, die Transportgeschwindigkeit auf dem Förderband oder Gleitgeschwindigkeit auf der Gleitebene, durch die Fallgeschwindigkeit in der Fallstrecke (die durch die Fallhöhe eingestellt wird) sowie den Abstand der jeweiligen Kamera von der Fallstrecke eingestellt. Diese Größen können erfindungsgemäß in gewünschter Weise variiert werden, um eine vollständige Vermessung mit hinreichender Vereinzelung zu gewährleisten.

Erfindungsgemäß können die Temperaturwerte der einzelnen Messpunkte des Messbereiches zum einen mit einer vorgegebenen maximalen Grenztemperatur verglichen werden, wobei bei Überschreiten der Grenztemperatur eine lokale Überhitzung festgestellt wird. In diesem Fall kann vorteilhafterweise der betreffende Bereich des Materialstromes entfernt, zum Beispiel ausgestoßen oder ausgeworfen werden; weiterhin ist eine Löschung, z. B. durch Zugabe von Wasser oder Kühlgas auf den betreffenden Bereich, vorgesehen. Das Entfernen bzw. Löschen der heißen Partikel bzw. Agglomerationen von Partikeln erfolgt vorteilhafterweise auf einem unterhalb der Fallstrecke angeordneten Aufnahmeförderband, da hierdurch die Messung des Materialstromes in der Fallstrecke nicht beeinflusst wird. Ein derartiges Verfahren kann insbesondere bei der Verarbeitung von Holzwerkstoffen, z. B. Spänen oder Holzfasern, verwendet werden.

Weiterhin ist es erfindungsgemäß möglich, Inhomogenitäten in der Temperaturverteilung des Schüttgutes zu ermitteln. Hierzu wird eine relative Temperaturverteilung des Schüttgutes in dem Materialstrom auf der Fallstrecke ermittelt, indem die Temperaturwerte der Messpunkte eines Messbereiches miteinander verglichen werden. Falls Inhomogenitäten erkannt werden, können einzelne Bereiche ebenfalls entfernt bzw, gekühlt werden; weiterhin kann auch eine nachfolgende zusätzliche Durchmischung des Schüttgutes vorgenommen werden, um einen Temperaturausgleich zu bewirken. Ein derartiges Verfahren zur Ermittlung der Inhomogenität des Schüttgutes kann z. B. bei der Bearbeitung von Tabak verwendet werden, da Inhomogenitäten in der Temperaturverteilung zu einer Beeinträchtigung der Qualität führen. Weiterhin kann ein derartiges Verfahren auch z. B. bei der Behandlung von Lebensmitteln verwendet werden.

Die von der Kamera bzw. den Kameras ermittelten Messwerte werden nachfolgend zu einer Auswerteeinheit ausgegeben, die den Vergleich mit der maximal zulässigen Grenztemperatur bzw. die Ermittlung möglicher Immobilitäten vornimmt. Die Messwerte des Schüttgutstromes können weiterhin auf Anzeigeeinheiten dargestellt werden, wobei vorteilhafterweise die Bilder jeder Kamera auf einer separaten Anzeigeeinheit wiedergegeben werden. Hierbei können in an sich bekannter Weise die Temperaturen der einzelnen Messpunkte durch unterschiedliche Farben wiedergegeben werden.

Erfindungsgemäß kann sowohl bei der Überprüfung auf lokale Überhitzungen als auch bei der Überprüfung der relativen Temperaturverteilung der vorgeordnete Bearbeitungsprozess beeinflusst werden. Hierbei kann insbesondere bei Feststellen lokaler Überhitzungen oder Feststellen größerer Inhomogenitäten eine Bearbeitungstemperatur in einem vorgeordneten Bearbeitungsprozess gesenkt werden.

Die Erfindung wird im folgenden anhand der beiliegenden Zeichnungen an einigen Ausführungsformen näher erläutert. Es zeigen:
- Fig. 1: den Aufbau einer erfindungsgemäßen Vorrichtung gemäß einer ersten Ausführungsform der Erfindung;
- Fig. 2: eine weitere Ausführungsform der Erfindung.

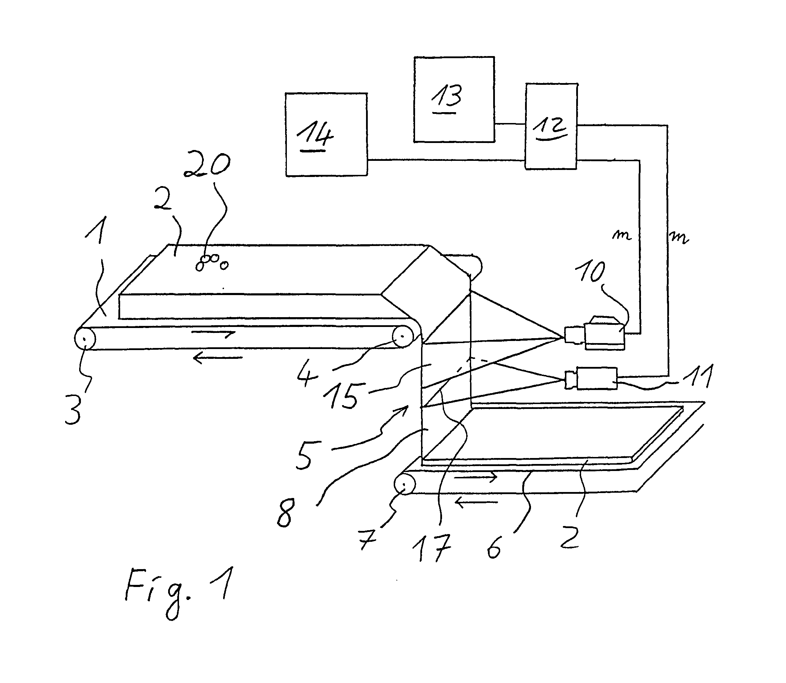

Gemäß Fig. 1 wird Schüttgut 2 auf einem Förderband 1 befördert, das zwischen zwei Umlenkrollen 3 und 4 bewegt wird. Das Schüttgut 2 weist einzelne Partikel 20 auf, die zum Teil - z. B. aufgrund ihrer Feuchtigkeit - agglomeriert sind. Das Schüttgut 2 kann durch in den Figuren nicht gezeigte seitliche Begrenzungen des Förderbandes aufgenommen werden.

An einem Ende des Förderbandes - bei Fig. 1 bei der Umlenkrolle 4 - fällt das Schüttgut 2 anschließend eine Fallstrecke 5 nach unten und bildet einen Schüttgutstrom 8. Der Schüttgutstrom 8 verläuft im wesentlichen vertikal nach unten; bei der Verwendung größerer Transportgeschwindigkeiten auf dem Förderband 1 kann das Schüttgutstrom 8 in einem oberen Bereich der Fallstrecke 5 zunächst noch eine horizontale Geschwindigkeitskomponente aufweisen; in einem weiter unten angeordneten Bereich der Fallstrecke 5 und insbesondere bei Verwendung relativ geringer Fördergeschwindigkeiten kann jedoch ein im wesentlichen vertikaler Verlauf des Schüttgutstromes 8 erreicht werden.

Die Fallstrecke 5 kann nach unten z. B. durch einen Sammelbehälter oder einem Sammelplatz begrenzt werden. Vorteilhafterweise ist gemäß Fig. 1 ein Aufnahmeförderband 6 vorgesehen, das z. B. über Umlenkrollen 7 geführt wird und das aufgenommene Schüttgut 2 wiederum abtransportiert.

Erfindungsgemäß ist mindestens eine Infrarot-Kamera vorgesehen, die auf einen Messbereich des Schüttgutstromes 8 in der Fallstrecke 5 gerichtet ist. In Fig. 1 ist hierzu zum einen eine Flächenkamera 10 gezeigt, die einen Flächenmessbereich 15 des Schüttgutstromes 8 in der Fallstrecke 5 erfasst. Eine derartige Flächenkamera kann den gesamten Schüttgutstrom 8, der von dem ersten Förderband 1 fällt, erfassen, wenn sie mit einer hinreichend großen Bildaufnahmefrequenz arbeitet. Diese Bildaufnahmefrequenz wird durch die Höhe des Messbereiches 15 erfasst, der wiederum von dem Aufnahmewinkel der Flächenkamera 10 und dem Abstand der Kamera 10 von der Fallstrecke 5 bestimmt wird. Weiterhin wird die Bildaufnahmefrequenz von der Fallgeschwindigkeit des Materialstromes 8 in der Fallstrecke 5 bestimmt.

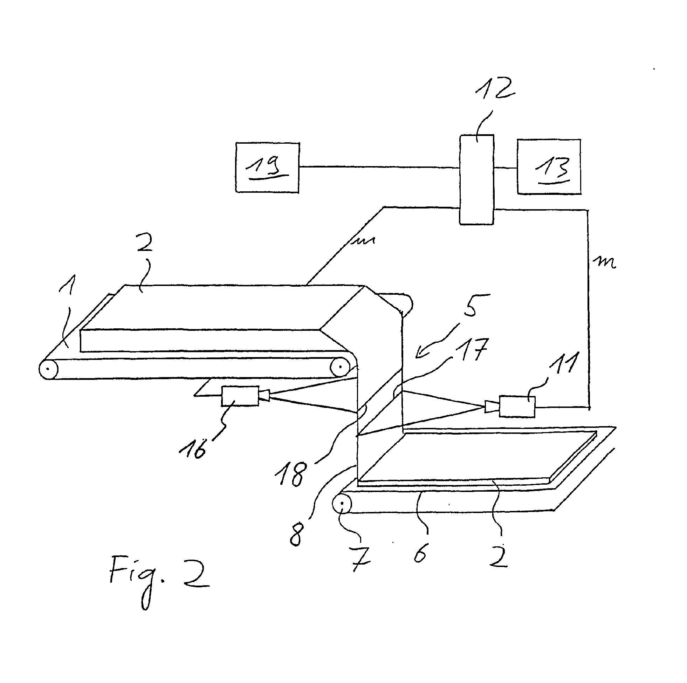

Erfindungsgemäß kann zusätzlich oder alternativ eine in Fig. 1 ebenfalls gezeigte Zeilenkamera 11 verwendet werden, die gemäß den Fig. 1, 2 einen Zeilenmessbereich 17 des Materialstromes erfasst. Der Zeilenmessbereich verläuft vorteilhafterweise im wesentlichen in horizontaler Richtung, d.h. senkrecht zur Fallrichtung des Schüttgutes. Durch eine hinreichend hohe Bildaufnahmefrequenz wird eine kontinuierliche bzw. quasi-kontinuierliche Vermessung des Schüttgutstromes 8 gewährleistet.

Messwerte m der jeweiligen Kamera 10, 11 werden an eine Auswerteeinheit 12 ausgegeben, die den jeweiligen Messpunkten jeweils einen Temperaturwert zuordnet. Die Temperaturwerte der einzelnen Messpunkte können anschließend mit einer vorgegebenen maximalen Grenztemperatur verglichen werden, um eine lokale Temperaturüberhöhung festzustellen. In diesem Fall kann der jeweilige Prozess angehalten werden; vorteilhafterweise werden die Schüttgutbereiche, in denen eine überhöhte Temperatur festgestellt worden ist, nachfolgend auf dem Aufnahmetransportband 6 entfernt, z. B. ausgestoßen, ausgeworfen oder auch gekühlt bzw. gelöscht. Hierzu werden entsprechende Steuersignale an die zum Entfernen bzw. Löschen verwendeter Einrichtung ausgegeben.

Weiterhin kann in der Auswerteeinheit 12 ein Vergleich der Temperaturwerte der einzelnen Messpunkte vorgenommen werden, um Inhomogenitäten in der Temperaturverteilung zu ermitteln. In diesem Fall können weiterhin z. B. Schüttgutbereiche mit höherer Temperatur entfernt bzw. gelöscht werden; weiterhin kann eine nachfolgende Durchmischung des Schüttgutes zur Angleichung der Temperatur durchgeführt werden.

Die Temperaturverteilung des Materialstromes 8 kann jeweils auf Anzeigeeinheiten 13 und 14, z. B. Monitoren, wiedergegeben werden. Hierbei können einzelne Temperaturwerte z. B. durch unterschiedliche Farben wiedergegeben werden.

In Fig. 1 sind beispielhaft eine Flächenkamera 10 und eine Zeilenkamera 11 gezeigt. Erfindungsgemäß können diese Kameras alternativ oder auch in Kombination verwendet werden. Insbesondere können Kameras gemäß Fig. 2 an entgegengesetzten Seiten des Schüttgutstromes 8 der Fallstrecke 5 angeordnet werden, wodurch eine bessere Erfassung des Schüttgutstromes 8 in der Fallstrecke ermöglicht wird. Somit ist die Sicherheit bzw. Messgenauigkeit erhöht. Weiterhin kann die Förderrate von Schüttgut auf dem Transportband 1 erhöht werden, da dickere Schüttgutströme 8 untersucht werden können.

Bei der Untersuchung des Materialstromes 8 von beiden Seiten können gemäß Fig. 2 zwei Zeilenkameras 11, 16 verwendet werden, die jeweils Zeilenmessbereiche 17, 18 erfassen. Weiterhin ist auch die Verwendung von zwei Flächenkameras sowie die Verwendung einer Flächenkamera und einer Zeilenkamera möglich. Die Messwerte m werden wiederum zunächst an eine Auswerteeinheit 12 ausgegeben, die wiederum Anzeigeeinheiten 13 und 19 ansteuert.

Erfindungsgemäß kann vorteilhafterweise bei der Feststellung von lokalen Überhitzungen oder Inhomogenitäten in der Temperaturverteilung auch steuernd in den vorherigen Prozess, z. B. einen Erwärmungsprozess des Schüttgutes, eingegriffen werden.

## Patentansprüche

1. Verfahren zur Erkennung von Brandgefährdungen lokal überhitzter Agglomerationen von Partikeln in einem aus einem Trocknungsprozess kommenden, aus Holzspänen, Holzfasern, Tabakblättern oder dergleichen bestehenden Schüttgut (2) , wobei das Schüttgut (2) in Form eines Schüttgutstromes eine Fallstrecke (5) zur Vereinzelung des schüttguts und dabei einen in dieser vorgesehenen Messbereich (15, 17, 18) durchläuft, in dem unter Verwendung von zumindest einer Infrarotkamera über die Breite des Schüttgutstromes eine räumlich aufgelöste, thermografische Vermessung des Schüttgutes (2) vorgenommen und aus den ausgegebenen Messwerten (m) ein etwaiges Überschreiten einer vorgegebenen Grenztemperatur durch eine Agglomeration von Partikeln im Schüttgutstrom ermittelt werden, wobei Flächenmessbereiche (15) der Fallstrecke (5) oder kontinuierlich Zeilenmessbereiche (17, 18) senkrecht zu einer Fallrichtung des Schüttgutes vermessen werden und die ermittelten lokal überhitzten Agglomerationen nachfolgend gelöscht werden.

2. Verfahren nach Anspruch 1, **dadurch gekennzeichnet, dass** das Schüttgut auf einem Förderband (1) transportiert wird und an einem Ende des Förderbandes die Fallstrecke herabfällt.

3. Verfahren nach Anspruch 1 oder 2, **dadurch gekennzeichnet, dass** mindestens jeweils eine Vermessung des Schüttgutes (2) von einer Vorderseite und einer Rückseite der Fallstrecke (5) vorgenommen wird.

4. Verfahren nach Anspruch 1, **dadurch gekennzeichnet, dass** die Flächenmessbereiche (15) in zeitlichen Abständen vermessen werden.

5. Verfahren nach einem der vorhergehenden Ansprüche, **dadurch gekennzeichnet, dass** der vorgeordnete Trocknungsprozess für das Schüttgut (2) in Abhängigkeit von der ermittelten Temperaturverteilung gesteuert wird.

## Claims

1. A method for identifying fire risks for locally overheated agglomerations of particles in a bulk material (2) arriving from a drying process and comprising wood shavings, wood fibers, tobacco leaves or the like, the bulk material (2), in the form of a bulk material stream, traversing a drop section (5) for the purpose of separating the bulk material and, in doing so, a measurement region (15, 17, 18) which is provided in said drop section and in which, using at least one infrared camera, over the width of the bulk material stream, a spatially resolved thermographic measurement of the bulk material (2) is performed and the measured values (m) output are used to determine any overshooting of a predetermined limit temperature by an agglomeration of particles in the bulk material stream, areal measurement regions (15) of the drop section (5) or linear measurement regions (17, 18) perpendicular to a falling direction of the bulk material being measured continuously and the locally overheated agglomerations determined being subsequently extinguished.

2. A method according to claim 1, **characterized in that** the bulk material is transported on a conveyor belt (1) and falls down the drop section at an end of the conveyor belt.

3. A method according to claim 1 or 2, **characterized in that** at least one measurement of the bulk material (2) is carried out in each case from a front side and a rear side of the drop section (5).

4. A method according to claim 1, **characterized in that** the areal measurement regions (15) are measured at time intervals.

5. A method according to any one of the preceding claims, **characterized in that** the prearranged drying process for the bulk material (2) is controlled in a manner dependent on the temperature distribution determined.

## Revendications

1. Procédé pour reconnaître des dangers d'incendie d'agglomérations de particules localement surchauffées dans un produit en vrac issu d'un procédé de séchage, constitué de copeaux de bois, fibres de bois, feuilles de tabac ou analogues, dans lequel le produit en vrac (2) parcoure sous forme d'un courant de produit en vrac un trajet de chute (5) pour disperser le produit en vrac et une zone de mesure (15, 17, 18) prévue dans celui-ci, dans lequel est effectuée une mesure thermographique du produit en vrac (2) à l'état spacialement dispersé par l'utilisation d'au moins une caméra infrarouge suivant la largeur du courant de produit en vrac et est déterminée au moyen des valeurs de mesure (m) obtenues un éventuel dépassement d'une température prédéterminée dû à l'agglomération de particules dans le produit en vrac, dans lequel on effectue des mesures sur des zones de surface (15) du trajet de la chute (5) ou sur des zones de lignes balayées en continu (17, 18) perpendiculairement à une direction de chute du produit en vrac et les agglomérations localement surchauffées sont ensuite dissoutes.

2. Procédé selon la revendication 1, **caractérisé en ce que** le produit en vrac est transporté sur une bande de convoyage (1) et le trajet de chute tombe vers le bas à une extrémité de la bande de convoyage.

3. Procédé selon la revendication 1 ou 2, **caractérisé en ce que** qu'au moins une mesure de produit en vrac (2) est effectuée chaque fois sur une face avant et une face arrière du trajet de chute (5).

4. Procédé selon la revendication 1, **caractérisé en ce que** les zones de mesure de surface (15) sont mesurées suivant des espacements latéraux.

5. Procédé selon l'une des revendications précédentes, **caractérisé en ce que** le procédé de séchage préalable du produit en vrac (2) est commandé en fonction de la répartition de la température déterminée.
